# EUROPÄISCHE PATENTANMELDUNG

(11) **EP 2 060 771 A2**
(43) Veröffentlichungstag der Anmeldung: **20.05.2009**
(21) Anmeldenummer: 08018061.5
(22) Anmeldetag: 15.10.2008
(51) Int. Cl.: F02M 25/07

(54) **Brennkraftmaschine mit AGR-Kühler**

(30) Priorität: 12.11.2007 DE 102007054227
(71) Anmelder: MAN Nutzfahrzeuge AG, 80995 München (DE)
(72) Erfinder: Möller, Heribert, 91623 Sachsen (DE); Raab, Gottfried, 4320 Perg (AT)

(57) **Zusammenfassung**

Beschrieben wird ein Verfahren zum Betrieb einer Brennkraftmaschine sowie eine Brennkraftmaschine mit einem Verbrennungsraum und einem Abgassystem, in das den Verbrennungsraum verlassendes Abgas (10) einleitbar ist und das über eine Abgasrückführung verfügt, mittels der das Abgas (10) zumindest teilweise in eine Verbrennungsluftzufuhr (5) zur Versorgung des Verbrennungsraums mit Ansaugluft (12) rückführbar ist, wobei in der Abgasrückführung eine Wärmeübertragereinheit (9) vorgesehen ist, mit der dem Abgas (10) Wärmeenergie entziehbar ist.

Das beschriebene Verfahren sowie die entsprechende Vorrichtung zeichnen sich dadurch aus, dass eine Verdichtereinheit (7) vorgesehen ist, die aus der Umgebung entnommene Ansaugluft (11) verdichtet und dass ferner die verdichtete Ansaugluft (11) durch die in der Abgasrückführung vorgesehene Wärmeübertragereinheit (9) leitbar ist.

## Beschreibung

### Technisches Gebiet:

Die Erfindung betrifft ein Verfahren zum Betrieb einer Brennkraftmaschine sowie eine Brennkraftmaschine mit einem Verbrennungsraum und einem Abgassystem, in das den Verbrennungsraum verlassenendes Abgas einleitbar ist. Das Abgassystem verfügt über eine Abgasrückführung, mittels der das Abgas zumindest teilweise in eine Verbrennungsluftzufuhr zur Versorgung des Verbrennungsraums mit Ansaugluft rückführbar ist, wobei in der Abgasrückführung eine Wärmeübertrageeinheit vorgesehen ist, mit der dem Abgasenergie Wärmenergie entziehbar ist.

### Stand der Technik

Allgemein sind Brennkraftmaschinen bekannt, deren Abgassysteme über Abgasrückführungen verfügen, über die Abgas, das den Verbrennungsraum verlassen hat, erneut der Ansaugluft wieder zugeführt wird. Insbesondere bei Kraftfahrzeugen sind derartige Abgassysteme mit Abgasrückführung bekannt. Mit Hilfe der Abgasrückführung wird das aus der Brennkraftmaschine geleitete Abgas über entsprechende Rohrleitungen zumindest teilweise der Verbrennungsluft zugeführt, so dass eine Enthalpieerhöhung der Verbrennungsluft erreicht wird.

In der Kraftfahrzeugtechnik sind vor allem Abgasrückführsysteme für aufgeladene Brennkraftmaschinen bekannt, bei denen aus Verschleiß- und Verschmutzungsgründen das Abgas zwischen dem Motor und der Turbine entnommen und durch einen separaten Abgasrückführwärmetauscher geleitet wird. Der abgekühlte Abgasstrom wird strömungstechnisch hinter einem Ladeluftkühler zur Kühlung der Ansaugluft der für die Verbrennung vorgesehenen Verbrennungsluft wieder zugeführt.

In diesem Zusammenhang ist etwa aus der EP 1 843 033 A2 die Abgasanlage einer Brennkraftmaschine bekannt, die über eine entsprechende Abgasrückführung verfügt. In der Abgasrückführung ist eine Wärmeübertragereinheit, so genannter AGR-Kühler, vorgesehen, mittels dem dem Abgas Wärme entzogen und einem Abgasnachbehandlungssystem zugeleitet wird. Hierbei ist die Wärmeübertrageeinheit abgasseitig derart ausgeführt, dass sich die Abgasdruckpulsationen, die das Abgas nach Verlassen des wenigstens einen Brennraumes der Brennkraftmaschine aufweist, durch die Wärmeübertrageeinheit fortsetzen, so dass die Eindüsung des rückgeführten Abgases mit Hilfe eines Flatterventils in die Verbrennungsluft realisiert wird.

Um die ständig steigenden Anforderungen an die Abgaswerte von Brennkraftmaschinen, insbesondere der Kraftfahrzeugverbrennungsmotoren, zu erfüllen, liegt der Erfindung ausgehend von dem bekannten Stand der Technik die Aufgabe zugrunde, die Ausnutzung der im Abgas enthaltenen Wärme zu verbessern. Insbesondere soll hierbei das im Fahrzeug befindliche, herkömmliche Kühlsystem (Wasserkühlung) nicht mit zusätzlichen Kühllasten belastet werden. Des Weiteren soll mit der Erfindung sichergestellt werden, dass eine Optimierung der Anlagenkonfiguration, vor allem in Hinblick auf das Vorsehen eines Abgasnachbehandlungssystems mit thermischer Regeneration, optimiert wird. Die hierfür vorzusehenden Komponenten sollten sich darüber hinaus verhältnismäßig einfach an eine herkömmliche Brennkraftmaschine koppeln, bzw. in das entsprechende Motorenkonzept integrieren lassen.

Die der Erfindung zugrunde liegende Aufgabe wird mit einer Brennkraftmaschine gemäß Anspruch 1 sowie einem Verfahren nach Anspruch 17 gelöst. Vorteilhafte Ausführungsformen der Erfindung sind Gegenstand der abhängigen Ansprüche und werden in der nachfolgenden Beschreibung unter Bezugnahme auf die Figuren näher erläutert.

Erfindungsgemäß ist eine Brennkraftmaschine mit einem Verbrennungsraum und einem Abgassystem, in das den Verbrennungsraum verlassendes Abgas einleitbar ist und das über eine Abgasrückführung verfügt, mittels der das Abgas (10) zumindest teilweise in eine Verbrennungsluftzufuhr zur Versorgung des Verbrennungsraums mit Verbrennungsluft rückführbar ist, wobei in der Abgasrückführung eine Wärmeübertragereinheit vorgesehen ist, mit der dem Abgas Wärmeenergie entziehbar ist, derart weitergebildet worden, dass eine Verdichtereinheit vorgesehen ist, mit der der Umgebung entnommene Ansaugluft verdichtet und der verdichtete Ansaugluftstrom unter Umgehung des Verbrennungsraums zunächst durch die in der Abgasrückführung vorgesehene Wärmeübertragereinheit leitbar ist.

Erfindungsgemäß ist somit innerhalb der Abgasrückführung eine Wärmeübertragereinheit vorgesehen, in der die dem Abgas entzogene Wärme auf einen Luftstrom übertragbar ist. Der Luftstrom wird, vorzugsweise als Teilluftstrom, der Ansaugluft entnommen und mittels einer üblicherweise als Lüfterrad ausgeführten Verdichtereinheit durch die Wärmeübertragereinheit und anschließend in einen außerhalb der Abgasrückführung befindlichen Bereich des Abgassystems geleitet ohne direkt in den Abgasstrang eingeleitet zu werden. Alternativ ist es denkbar, die für den in der Abgasrückführung vorgesehenen Luft-/Abgaswärmetauscher benötigte Ansaugluft unmittelbar der Umgebung zu entnehmen und getrennt von der für die Verbrennung benötigte Verbrennungsluft zu führen.

Mit dieser technischen Lösung wird zunächst sichergestellt, dass mit Hilfe eines luftgekühlten Wärmeübertragers in der Abgasrückführung Wärme abgeführt werden kann, ohne das Hauptkühlsystem eines Fahrzeugs zu belasten. Darüber hinaus wird der verdichtete und durch die Wärmeübertragereinheit in der Abgasrückführung erwärmte Ansaugluftstrom genutzt, um das im Abgassystem außerhalb der Abgasrückführung geführte Abgas, vorzugsweise bevor es in ein Abgasnachbehandlungssystem strömt, zu erwärmen oder den entsprechenden Bereich des Abgassystems zumindest derart zu isolieren, dass eine zu starke Auskühlung des Abgases vor Erreichen des Abgasnachbehandlungssystems verhindert wird. Wesentlich hierbei ist, dass der verdichtete und erwärme Ansaugluftstrom nicht durch das Abgasnachbehandlungssystem geleitet wird. Eine Isolation kann in diesem Zusammenhang etwa dadurch erreicht werden, dass die aus der luftgekühlten Wärmeübertragereinheit ausströmende erwärmte Luft in einem Rohr-in-Rohr-System außen an einem Abgasrohr entlang geleitet wird.

Alternativ wird die aus der luftgekühlten Wärmeübertragereinheit auströmende Luft direkt in die Umgebung abgegeben oder in Strömungsrichtung des Abgases hinter einem Abgasnachbehandlungssystem in das Abgassystem eingeleitet. In dem letztgenannten Fall stellt die Einleitung der im Bereich der Abgasrückführung erwärmten Ansaugluft in den Abgasschalldämpfer eine bevorzugte Ausführungsform dar.

Mit der beschriebenen technischen Lösung wird mit Hilfe einer zusätzlichen Verdichtereinheit und einer Wärmeübertragereinheit in der Abgasrückführung eine Abkühlung des in der Abgasrückführung befindlichen Abgases erreicht, ohne dass bei der Dimensionierung der Verdichtereinheit auch die durch die Komponenten des Abgasnachbehandlungssystems, wie etwa Katalysatoren und/oder Partikelabscheider, hervorgerufenen Strömungsverluste berücksichtigt werden müssen. Die im verdichteten und erwärmten Ansaugluftstrom enthaltene Wärme wird somit genutzt und der Luftstrom schließlich unter strömungstechnischer Umgehung des Abgasnachbehandlungssystems an die Umgebung abgegeben.

Eine besonders geeignete Weiterbildung der Erfindung sieht vor, dass die Regelung der Verdichtereinheit unabhängig von der Regelung der übrigen Kühlkreisläufe gestaltet wird. Die Verdichtereinheit, mit der ein Kühlluftstrom durch die in der Abgasrückführung vorgesehene Wärmeübertragereinheit leitbar ist, wird insbesondere zusätzlich zu und separat von den übrigen Lüftern, die beispielsweise in Verbindung mit Wärmeübertragereinheiten, wie etwa einem Hauptkühlmittelkühler, der ggf. einen Hochtemperatur- und einen Niedertemperaturteil aufweist, einem Ladeluftkühler oder einem Kondensator einer Klimaanlage im Einsatz sind, betrieben.
Durch die Verdichtereinheit wird zumindest ein Teilluftstrom, der über eine Ansauganlage angesaugten Ansaugluft verdichtet und unter Umgehung des Verbrennungsraums der Wärmeübertragereinheit in der Abgasrückführung zugeleitet. Dem Abgas in der Abgasrückführung kann so mittels des beschriebenen luftgekühlten Wärmeübertragers Wärme entzogen werden, ohne dass diese einen der übrigen im Fahrzeug vorgesehenen Kühlkreisläufe belastet.

Die in der Abgasrückführung des Abgassystems vorgesehene Wärmeübertragereinheit wird abgasseitig von zumindest einem Teilstrom des den wenigstens einen Verbrennungsraums der Brennkraftmaschine verlassenden Abgasstrom durchströmt. Hierbei wird innerhalb der Wärmeübertragereinheit der Abgasstrom abgekühlt, während der Ansaugluftstrom die entsprechende Wärmemenge, abzüglich der wärmeübertragerspezifischen Verluste, aufnimmt. Der abgekühlte Abgasstrom bzw. Abgasteilstrom wird in geeigneter Weise über ein Flatterventil erneut der Verbrennungsluftzufuhr zugeleitet. Auf dieser Weise erfolgt die gewünschte Enthalpieerhöhung der Ansaugluft bevor diese in den Ansaugkrümmer der Brennkraftmaschine eingeleitet wird.

Selbstverständlich lässt sich die erfindungsgemäße technische Lösung, bei der innerhalb der Abgasrückführung eine Wärmeübertragung zwischen dem den Verbrennungsraum verlassenden Abgas und der Ansaugluft stattfindet, mit bekannten System zur Aufladung einer Brennkraftmaschine sowie zur Nutzung der Abwärme des Abgases koppeln. So ist es einerseits beispielsweise denkbar, das beschriebene System mit einer zweistufigen Aufladung zu kombinieren, bei der sich in der Verbrennungsluftzufuhr sowohl nach der ersten als auch der zweiten Verdichterstufe jeweils eine Wärmeübertragereinheit zur Kühlung der Verbrennungs- bzw. Ladeluft befindet.

Zum anderen ist es auf bevorzugte Weise möglich, eine erste und eine zweite Wärmeübertragereinheit innerhalb der Abgasrückführung vorzusehen, wobei in der ersten Wärmeübertrageeinheit, wie bereits beschrieben, eine Wärmeübertragung zwischen Abgas und verdichteter Ansaugluft und in der zweiten Wärmeübertrageeinheit zwischen Abgas und einem weiteren Wärmeträgermedium stattfindet. Das weitere Wärmeträgermedium dient in diesem Fall auf vorteilhafte Weise der Bereitstellung der entnommenen Wärme für weitere Komponenten, insbesondere für ein System zur Abwärmenutzung in einem Kraftfahrzeug. Beide innerhalb der Abgasrückführung vorgesehenen Wärmeübertragereinheiten werden vorzugsweise parallel von jeweils einem Abgasteilstrom durchströmt.

In einer ganz speziellen Ausführungsform der Erfindung verfügt die Abgasrückführung des der Brennkraftmaschine nachgestalteten Abgassystems über zwei parallel geschaltete Wärmeübertragereinheiten, von denen die erste thermisch an die verdichtete Ansaugluft gekoppelte kleiner als die zweite Wärmeübertrageeinheit ausgeführt ist. Die zweite Wärmeübertragereinheit, deren Kälteleistung größer als die der ersten dimensioniert ist, wird vorzugsweise auf der dem Abgas abgewandten Seite von einem flüssigen oder zumindest teilweise dampfförmigem Wärmeträgermedium durchströmt. Mit Hilfe dieses Wärmeträgermediums wird die dem Abgas entzogene Wärme beispielsweise einem Abgasnachbehandlungssystem zur Verfügung stellt.
Kleiner bedeutet in diesem Zusammenhang, das vorzugsweise der Volumenstrom des die Abgasrückführung insgesamt durchströmenden Abgases ungleichmäßig auf die beiden Wärmeübertragungseinheiten in der Abgasrückführung verteilt wird, wobei der kleinere der beiden Volumenströme durch die thermisch an die Ansaugluft gekoppelte Wärmeübertrageeinheit geleitet wird. Vorteilhafterweise sind hierbei die beiden Wärmeübertragereinheiten derart ausgeführt, dass der die Abgasrückführung durchströmende Abgasstrom bzw. die Abgasteilströme auf eine Temperatur von etwa 170°C abgekühlt wird bzw. werden, bevor das abgekühlte Abgas erneut in die Verbrennungsluftzufuhr eingeleitet wird.

In einer weiteren besonderen Ausführungsform der Erfindung wird die verdichtete, in der luftgekühlten Wärmeübertragereinheit der Abgasrückführung erwärmte Luft einer weiteren Wärmeübertragereinheit zugeleitet. Eine spezielle Weiterbildung der Erfindung sieht in diesem Zusammenhang vor, dass es sich bei der weiteren Wärmeübertragereinheit um einen in das Motorkühlsystem integrierten Wärmeübertrager handelt. Auf diese Weise ist es möglich, das Motorkühlsystem auf vergleichsweise einfache Art zu entlasten. Bei einer derartigen technischen Lösung ist es somit denkbar, aus der Umgebung angesaugte und zumindest teilweise verdichtete Luft zu verwenden, um die in einem Kondensator des Motorkühlsystems anfallende Wärme abzuführen. Auch die Kombination eines derartigen luftgekühlten Wärmeübertragers mit einem wenigstens einen Nieder- und einen Hochtemperaturkreislauf aufweisenden Motorkühlsystem ist denkbar.

Die Wärme, die dem Abgasstrom innerhalb der Abgasrückführung durch eine von einem Teilluftstrom der Ansaugluft durchströmte Wärmeübertragereinheit entnommen und an die Ansaugluft übertragen wird, wird vorzugsweise derart in das Abgassystem eingeleitet, dass die Wärme in einem Abgasnachbehandlungssystem nutzbar ist. Mit der vorgesehenen Wärmeübertrageeinheit in der Abgasrückführung wird somit auf bevorzugte Weise zumindest ein Teil der Ansaugluft erwärmt und derart in das Abgassystem eingebracht, dass die Wärme an Anlagenkomponenten eines Abgasnachbehandlungssystems übertragen wird. Auf bevorzugte Weise findet eine Nutzung der Wärme in einem Abgasnachbehandlungssystem statt, indem Katalysatoren, Abscheider und/oder Filter aufgeheizt werden und insbesondere indem die dem Abgas mittels der Wärmeübertragung auf einen verdichteten Teilluftstrom entnommene Wärme für eine thermische Regeneration eines Partikelabscheiders genutzt wird. Bei einem Partikelabscheider kann es sich in einer bevorzugten Ausführungsform auch um einen Partikelfilter handeln.

Im Zusammenhang mit der Nutzung der dem Abgasstrom in der Abgasrückführung entnommenen Wärme zur thermischen Regeneration eines Partikelabscheiders und/oder eines Partikelfilters ist es besonders geeignet, die der Wärmeübertragereinheit auf der Ansaugluftseite vorgeschaltete Verdichtereinheit derart auszuführen, dass die durch diese Verdichtereinheit bewirkte Drucksteigerung der Ansaugluft einen Druckverlust aufgrund der thermischen Regeneration ausgleicht.

Durch das Vorsehen einer zusätzlichen Wärmeübertragereinheit in der Abgasrückführung, die nicht an das herkömmliche Kühlsystem gekoppelt ist, wird es somit auf bevorzugte Weise möglich, eine Erhöhung der Temperatur im Bereich der Abgasnachbehandlung zu erreichen, um etwa Intervalle, in denen eine Regeneration eines Partikelabscheiders nötig wird, zu vergrößern. Dies wiederum erhöht die Effektivität eines Abgasnachbehandlungssystems, da über die gesamte Laufzeit des Systems betrachtet, die Druckverluste verringert werden. Darüber hinaus stellt die beschriebene Wärmeübertragereinheit sicher, dass dem Abgas Wärme entnommen wird, die nicht über das Hauptkühlsystem, insbesondere ein Kühlsystem eines Kraftfahrzeugs, abgeführt werden muss. Dies stellt vor allem eine Entlastung hinsichtlich der Kühllasten der herkömmlich vorgesehenen Wasserkühler dar.

Genauso ist es denkbar, die in der Abgasrückführung erwärmte Luft zur Isolation einer Rohrleitung im Bereich eines Abgasnachbehandlungssystems zu nutzen. Die erwärmte Luft strömt hierbei in einem Außenrohr, das um das eigentliche Abgasrohr herum angeordnet ist. Alternativ kann die innerhalb der in der Abgasrückführung vorgesehenen Wärmeübertragereinheit erwärmte Luft direkt an die Umgebung abgegeben werden oder im Bereich des Abgasschalldämpfers in das Abgassystem eingeleitet werden.

Bei einer ganz speziellen Ausführungsform der Erfindung wird die der von Ansaugluft durchströmten Wärmeübertragereinheit vorgeschaltete Verdichtereinheit in die Ansauganlage für die Versorgung der Brennkraftmaschine mit Verbrennungsluft integriert. Vorzugsweise ist hierbei eine Regelarmatur vorgesehen, die den verdichteten Ansaugluftstrom in einen ersten und einen zweiten Ansaugteilluftstrom aufteilt. Von diesen verdichteten Teilströmen wird in Abhängigkeit des Betriebszustandes der eine Teilstrom der in der Abgasrückführung vorgesehenen Wärmeübertragereinheit zugeführt, während der zweite Ansaugluftteilstrom in die Verbrennungsluftzufuhr der Brennkraftmaschine eingeleitet wird. In diesem Zusammenhang besteht die Funktion der Verdichtereinheit zum einen darin, dass diese während der Startphase als Beschleunigungshilfe für die Brennkraftmaschine dient, da im Ansaugtakt der Brennkraftmaschine zusätzliche Luft zur Verfügung steht und andererseits, dass durch diese zusätzlich bereitgestellte Luftmenge auch im Bremsfall eine höhere Bremsleistung der Motorbremse erzielt wird.

Neben einer Brennkraftmaschine mit einer entsprechenden Abgasrückführung des Abgassystems bezieht sich die Erfindung auch auf ein Verfahren zum Betrieb einer entsprechenden Brennkraftmaschine. Das erfindungsgemäße Verfahren, bei dem den Verbrennungsraum verlassendes Abgas in ein Abgassystem geleitet wird, zumindest ein Teilstrom des Abgases über eine Abgasrückführung in eine Verbrennungsluftzufuhr, die zur Versorgung des Verbrennungsraums mit Ansaugluft vorgesehen ist, rückgeführt wird und bei dem in der Abgasrückführung eine Wärmeübertrageeinheit vorgesehen ist, mittels der dem Abgas Wärmeenergie entzogen wird, zeichnet sich dadurch aus, dass der Ansaugluft ein Teilluftstrom entnommen sowie verdichtet wird und anschließend durch eine in der Abgasrückführung vorgesehene Wärmeübertrageeinheit geleitet wird. Im Anschluss an die Durchleitung durch die Wärmeübertragereinheit in der Abgasrückführung wird der verdichtete und nunmehr erwärmte Ansaugluftstrom in die Umgebung oder wahlweise vor oder hinter einem Abgasnachbehandlungssystem in das Abgassystem eingeleitet.

In einer speziellen Ausführungsform der Erfindung wird der verdichtete Ansaugluftstrom mittels eines Regelorgans in zwei Teilluftströme aufgeteilt, die wahlweise der luftgekühlten Wärmeübertragereinheit in der Abgasrückführung und/oder der Verbrennungsluftzufuhr der Brennkraftmaschine zugeleitet werden.

In einer speziellen Ausführungsform der Erfindung zeichnet sich das Verfahren dadurch aus, dass der verdichtete Teilluftstrom während einer Zeitspanne von 0 bis 5s, vorzugsweise von 1 bis 2 s, nach Betriebsstart der Brennkraftmaschine ausschließlich in die Verbrennungsluftzufuhr eingeleitet wird. Durch dieses kurzzeitige Einblasen zusätzlicher verdichteter Luft in die Verbrennungsluftzufuhr wird auf bevorzugte Weise eine Beschleunigungshilfe während der Startphase der Brennkraftmaschine bewirkt. Nach Abschluss dieser Startphase, also nach etwa fünf Sekunden, bevorzugt nach zwei Sekunden im Anschluss an den Betriebsstart wird die verdichtete Luft nicht mehr der Verbrennungsluftzufuhr, sondern vielmehr einer in der Abgasrückführung der Brennkraftmaschine vorgesehenen Wärmeübertrageeinheit zugeleitet, dort erwärmt und anschließend in das Abgassystem eingeleitet, um dort die dem Abgas entnommene Wärme nutzbar zu machen.

Eine weitere Ausgestaltung des erfindungsgemäßen Verfahrens sieht vor, dass der durch die in der Abgasrückführung vorgesehene Wärmeübertragereinheit geleitete, verdichtete und erwärmte Teilluftstrom wenigstens einer Anlagenkomponente eines Abgasnachbehandlungssystems zugeführt wird. Vorzugsweise wird die dem Abgasnachbehandlungssystem zur Verfügung gestellte Wärme zur thermischen Regeneration eines Partikelabscheiders und/oder eines Partikelfilters genutzt.
Das vorgeschriebene Verfahren eignet sich besonders, wenn zusätzlich an wenigstens einer weiteren Stelle der Abgasrückführung dem Abgas Wärme entzogen wird.

Die beschriebene Wärmeübertrageeinheit bzw. das beschriebene Verfahren, bei dem der Ansaugluft ein Teilluftstrom entnommen, dieser Teilluftstrom verdichtet und schließlich in einer Wärmeübertragereinheit in der Abgasrückführung mit Hilfe von Wärme, die dem Abgas entnommen wird, aufgeheizt wird, eignet sich insbesondere zur Kombination bzw. Integration in Systeme, die bereits eine Wärmeübertragereinheit in der Abgasrückführung aufweisen.

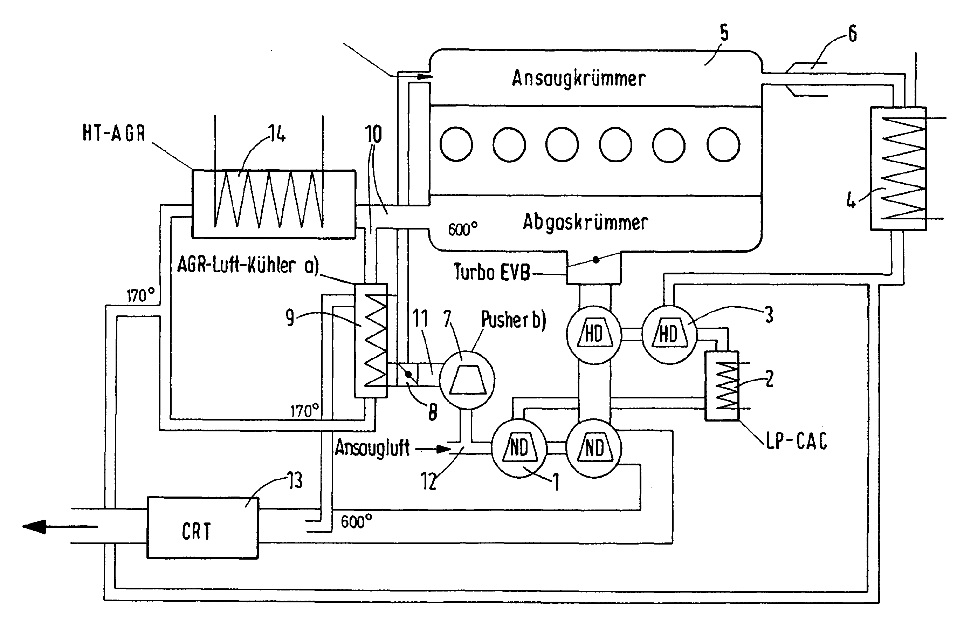

Im Folgenden wird die Erfindung anhand eines Ausführungsbeispiels unter Bezugnahme auf die Figur ohne Beschränkung des allgemeinen Erfindungsgedankens näher erläutert.

Die Figur zeigt ein thermodynamisches Schaltbild, auf dem die Verschaltung einer zweistufig aufgeladenen Brennkraftmaschine eines Nutzfahrzeugs mit integrierter Abgasrückführung und Abgasnachbehandlung schematisch dargestellt ist. Ein derartiges System ist in geeigneter Auslegung kann die gemäß "Euro 6" vorgeschriebenen Abgaswerte erfüllen.

Der Umgebung wird Ansaugluft zu Umgebungsbedingungen entnommen und einer Niederdruckverdichterstufte 1, einem Zwischenkühler 2 sowie einer Hochdruckverdichtereinheit 3 und einem Hauptladeluftkühler zugeführt, bevor sie in den Ansaugkrümmer 5 der Verbrennungsluftzufuhr einer Brennkraftmaschine eingeleitet wird. Durch das Vorsehen einer Venturidüse 6 wird die Strömungsgeschwindigkeit der angesaugten Luft stark erhöht, bevor diese in dem Bereich des Ansaugkrümmers 5 eintritt.

Wie der Schemadarstellung des Weiteren zu entnehmen ist, wird der Ansaugluft noch vor der Niederdruckverdichtereinheit 1 ein Teilluftstrom entnommen, der wiederum einer Verdichtereinheit 7 zugeführt wird. Der Verdichtereinheit 7 ist strömungstechnisch eine in Form einer Klappe ausgebildete Regelarmatur 8 nachgeschaltet, so dass an dieser Stelle der der Ansaugluft entnommene Teilluftstrom abermals aufgeteilt werden kann.

In einer ersten Betriebsphase, die mit einem Betriebsstart der Brennkraftmaschine zusammenfällt und ein bis zwei Sekunden andauert, wird der Ansaugluft ein Teilluftstrom entnommen, mit Hilfe der Verdichtereinheit 7 verdichtet und die Regelarmatur 8 derart geschaltet, dass dieser verdichtete Teilluftstrom zusätzlich zu der übrigen Ansaugluft in den Ansaugkrümmer 5 gelangt. Auf diese Weise wird dem Verbrennungsraum der Brennkraftmaschine zusätzlich verdichtete Luft zur Verfügung gestellt. Auf diese Weise wird in der Startphase der Brennkraftmaschine eine zusätzliche Beschleunigungshilfe realisiert.

Sobald die Startphase der Brennkraftmaschine abgeschlossen ist, wird die Regelarmatur 8 umgeschaltet, so dass der der Ansaugluft entnommene Teilluftstrom mit Hilfe der Verdichtereinheit 7 verdichtet und schließlich in eine erste innerhalb der Abgasrückführung der Brennkraftmaschine angeordnete Wärmeübertrageeinheit 9 eingeleitet wird. In der ersten Wärmeübertrageeinheit 9 findet eine Wärmeübertragung zwischen einem die Brennkraftmaschine verlassenden Abgasstrom bzw. Abgasteilstrom 10 und dem verdichteten Teilluftstrom 11 der Ansaugluft 12 statt. Hierbei wird das Abgas abgekühlt und der Teilluftstrom 11 erwärmt. Der erwärmte Teilluftstrom 11 wird anschließend einem Abgasnachbehandlungssystem 13 zugeleitet. Durch die Einleitung eines derart aufgeheizten Luftstroms in die Abgasnachbehandlung 13 findet an dieser Stelle eine Erwärmung der entsprechenden Abgasnachbehandlungskomponenten statt. Durch diese zusätzliche Erwärmung kann das Temperaturniveau, insbesondere in einem Partikelabscheider innerhalb des Abgasnachbehandlungssystems 13 auf einem vergleichsweise hohen Niveau gehalten werden. Diese Erhöhung des Temperaturniveaus wiederum bewirkt, dass die für die thermische Regenerierung erforderlichen Intervalle gegenüber herkömmlichen Systemen verlängert werden können.

Das in der Figur dargestellte System zeichnet sich dadurch aus, dass der Abgasteilstrom 10 der dem Abgas entnommen wird, in der Abgasrückführung mit Hilfe von zwei Wärmeübertragereinheiten von einer Temperatur von etwa 600°C auf eine Temperatur von 170°C abgekühlt wird. Hierbei sind die beiden in der Abgasrückführung vorgesehenen Wärmeübertrageeinheiten 9, 14 strömungstechnisch parallel geschaltet. Die mit Hilfe des ersten Wärmeübertragers 9 dem Abgasteilstrom 10 entnommene Wärme wird, wie zuvor beschrieben an einen verdichteten Teilluftstrom 11 der Ansaugluft übertragen. In der zweiten Wärmeübertragereinheit 14 wird dagegen das Abgas abgekühlt und ein weiteres Wärmeträgermedium, bei dem es sich vorzugsweise um ein Wasser-Glykol-Gemisch handelt, aufgewärmt. Die abgekühlten Abgasströme, die die beiden Wärmeübertragereinheiten 9, 14 der Abgasrückführung verlassen, werden zusammen geführt und zwischen der Hochdruckverdichtereinheit 3 und dem Ladelufthauptkühler 4 erneut der Verbrennungsluftzufuhr zugeführt.

Das Vorsehen einer Wärmeübertragereinheit 9 innerhalb der Abgasrückführung, die nicht an eines der übrigen im Fahrzeug vorgesehenen Kühlsysteme gekoppelt ist, ermöglicht einerseits die Abfuhr und Nutzung von Wärme aus dem Abgas, ohne die üblichen Kühlsysteme zu belasten und stellt andererseits durch die Kombination mit einer zusätzlichen Verdichtereinheit 7 (Pusher) eine zusätzliche Beschleunigungshilfe für den Startvorgang der Brennkraftmaschine zur Verfügung.

### Bezugszeichenliste

- 1: Niederdruckverdichter
- 2: Zwischenkühler
- 3: Hochdruckverdichter
- 4: Ladelufthauptkühler
- 5: Ansaugkrümmer der Verbrennungsluftzufuhr
- 6: Düse
- 7: Verdichtereinheit
- 8: Regelarmatur
- 9: ansaugluftdurchströmte Wärmeübertragereinheit
- 10: Abgas
- 11: verdichteter Teilluftstrom der Ansaugluft
- 12: Ansaugluft
- 13: Abgasnachbehandlungssystem
- 14: zweite Wärmeübertragereinheit

## Patentansprüche

1. Brennkraftmaschine mit einem Verbrennungsraum und einem Abgassystem, in das den Verbrennungsraum verlassendes Abgas (10) einleitbar ist und das über eine Abgasrückführung verfügt, mittels der das Abgas (10) zumindest teilweise in eine Verbrennungsluftzufuhr (5) zur Versorgung des Verbrennungsraums mit Verbrennungsluft (12) rückführbar ist, wobei in der Abgasrückführung eine Wärmeübertragereinheit (9) vorgesehen ist, mit der dem Abgas (10) Wärmeenergie entziehbar ist,
**dadurch gekennzeichnet, dass** eine Verdichtereinheit (7) vorgesehen ist, mit der der Umgebung entnommene Ansaugluft verdichtet und der verdichtete Ansaugluftstrom (11) unter Umgehung des Verbrennungsraums zunächst durch die in der Abgasrückführung vorgesehene Wärmeübertragereinheit (9) leitbar ist.

2. Brennkraftmaschine nach Anspruch 1,
**dadurch gekennzeichnet, dass** in der Abgasrückführung wenigstens eine weitere Wärmeübertragereinheit vorgesehen ist, die von dem verdichteten Ansaugluftstrom durchströmbar ist.

3. Brennkraftmaschine nach Anspruch 2,
**dadurch gekennzeichnet, dass** die weitere Wärmeübertragereinheit parallel zu der ersten in der Abgasrückführung vorgesehenen Wärmeübertragereinheit (9) von der verdichteten Ansaugluft durchströmbar ist.

4. Brennkraftmaschine nach einem der Ansprüche 1 bis 3,
**dadurch gekennzeichnet, dass** ein Teilstrom der der Umgebung entnommenen Ansaugluft einer separaten Wärmeübertragereinheit zugeführt wird, die hydraulisch in einen Motorkühlkreislauf eingebunden ist.

5. Brennkraftmaschine nach einem der Ansprüche 1 bis 4,
**dadurch gekennzeichnet, dass** der verdichtete Ansaugluftstrom nach der Durchleitung durch die Wärmeübertragereinheit (9) durch einen Abgaswärmeübertrager, der in thermischem Kontakt mit einem außerhalb der Abgasrückführung befindlichen Bereich des Abgassystems steht, leitbar ist.

6. Brennkraftmaschine nach einem der Ansprüche 1 bis 5,
**dadurch gekennzeichnet, dass** ein Stellorgan vorgesehen ist, mittels dem ein der Umgebung entnommener Luftstrom in den Verbrennungsluftstrom und den Ansaugluftstrom aufteilbar ist.

7. Brennkraftmaschine nach einem der Ansprüche 1 bis 6,
**dadurch gekennzeichnet, dass** die Verdichtereinheit (7) über ein Starterritzel eines Anlassers der Brennkraftmaschine angetrieben wird.

8. Brennkraftmaschine nach einem der Ansprüche 1 bis 6,
**dadurch gekennzeichnet, dass** die Verdichtereinheit (7) über einen Zahnrad- und/oder einen Riemenantrieb angetrieben wird.

9. Brennkraftmaschine nach einem der Ansprüche 1 bis 8,
**dadurch gekennzeichnet, dass** in der Abgasrückführung des Abgassystems eine erste und eine zweite Wärmeübertragereinheit (9, 14) vorgesehen sind, die strömungstechnisch parallel geschaltet sind, und von denen nur die erste Wärmeübertragereinheit (9) mit einem verdichteten Teilluftstrom (11) versorgbar ist.

10. Brennkraftmaschine nach Anspruch 9,
**dadurch gekennzeichnet, dass** eine Kühlleistung der zweiten Wärmeübertragereinheit (14), in Bezug auf die Abkühlung des Abgases, größer als eine Kühlleistung der ersten Wärmeübertragereinheit (9) ist.

11. Brennkraftmaschine nach einem der Ansprüche 1 bis 10,
**dadurch gekennzeichnet, dass** die erste Wärmeübertragereinheit (9) als Rohr-in-Rohr-Wärmeübertrager ausgeführt ist.

12. Brennkraftmaschine nach Anspruch 11,
**dadurch gekennzeichnet, dass** der Rohr-in-Rohr-Wärmeübertrager derart angeordnet ist, dass der aus der in der Abgasrückführung vorgesehenen Wärmeübertragereinheit (9) kommende verdichtete Ansaugluftstrom (11) durch ein Außenrohr des Rohr-in-Rohr-Wärmeübertragers leitbar ist.

13. Brennkraftmaschine nach einem der Ansprüche 1 bis 12,
**dadurch gekennzeichnet, dass** die verdichtete Ansaugluft nach Verlassen der Wärmeübertragereinheit (9) in das Abgassystem leitbar ist.

14. Brennkraftmaschine nach einem der Ansprüche 1 bis 12,
**dadurch gekennzeichnet, dass** die verdichtete Ansaugluft nach Verlassen der Wärmeübertragereinheit (9) in die Umgebung leitbar ist.

15. Brennkraftmaschine nach einem der Ansprüche 1 bis 13,
**dadurch gekennzeichnet, dass** die verdichtete Ansaugluft nach Verlassen der Wärmeübertragereinheit (9) in Strömungsrichtung vor einer Abgasnachbehandlungseinheit in das Abgassystem leitbar ist.

16. Brennkraftmaschine nach einem der Ansprüche 1 bis 13,
**dadurch gekennzeichnet, dass** die verdichtete Ansaugluft nach Verlassen der Wärmeübertragereinheit (9) im Bereich eines Abgasschalldämpfers in das Abgassystem leitbar ist.

17. Verfahren zum Betrieb einer Brennkraftmaschine, die über wenigstens einen Verbrennungsraum verfügt, bei dem den Verbrennungsraum verlassendes Abgas (10) in ein Abgassystem geleitet wird, zumindest ein Teilstrom des Abgases über eine Abgasrückführung in eine Verbrennungsluftzufuhr (5), die zur Versorgung des Verbrennungsraums mit Ansaugluft (12) vorgesehen ist, rückgeführt wird, und bei dem in der Abgasrückführung eine Wärmeübertragereinheit (9) vorgesehen ist, mittels der dem Abgas Wärmeenergie entzogen wird,
**dadurch gekennzeichnet, dass** der Ansaugluft (12) zumindest ein Teilluftstrom entnommen sowie verdichtet wird und der verdichtete Ansaugluftstrom (11) unter Umgehung des Verbrennungsraums zunächst durch die in der Abgasrückführung vorgesehene Wärmeübertragereinheit (9) und anschließend durch eine Einheit, die thermisch an einen außerhalb der Abgasrückführung befindlichen Bereich des Abgassystems gekoppelt ist, geleitet wird.

18. Verfahren nach Anspruch 17,
**dadurch gekennzeichnet, dass** Wärme aus dem durch die in der Abgasrückführung vorgesehene Wärmeübertragereinheit (9) geleiteten verdichteten und erwärmten Ansaugluftstrom (11) an zumindest eine Komponente eines Abgasnachbehandlungssystems (13) übertragen wird.
